# EUROPÄISCHE PATENTANMELDUNG

(11) **EP 2 926 934 A1**
(43) Veröffentlichungstag der Anmeldung: **07.10.2015**
(21) Anmeldenummer: 15162088.7
(22) Anmeldetag: 31.03.2015
(51) Int. Cl.: B23D 21/08

(54) **Rohrabschneider**

(30) Priorität: 31.03.2014 DE 102014104474
(71) Anmelder: Bilz, Sonja Maria, 61130 Nidderau (DE)
(72) Erfinder: Bilz, Sonja Maria, 61130 Nidderau (DE)
(74) Vertreter: Farago, Peter Andreas

(57) **Zusammenfassung**

Die Erfindung betrifft einen Rohrabschneider mit einem Paar drehbar gelagerten Stützrollen (108, 110) und einem den Stützrollen gegenüberliegenden, drehbar gelagerten Schneidrad (112) mit veränderlichem Abstand zu den Stützrollen. Der Rohrabschneider weist einen langgestreckten Stützdorn (102) mit einem ersten Ende und einem zweiten Ende auf, wobei das zweite Ende des Stützdorns durch einen im Wesentlichen rotationssymmetrischen Kopf (114) gebildet wird, der drehbar am Stützdorn gelagert ist. Am ersten Ende des Stützdorns sind zwei langgestreckte Arme (104, 106) angebracht, die ungefähr so lang wie der Stützdorn sind und die dafür eingerichtet sind, sich auf einander entgegengesetzten Seiten des Stützdorns jeweils von dem ersten Ende zu dem zweitem Ende des Stützdorns zu erstrecken. Am Ende eines der Arme (104) sind die Stützrollen gelagert, und am Ende des anderen Arms ist das Schneidrad gelagert. Die Stützrollen, das Schneidrad und der Kopf haben im Wesentlichen parallele Achsen und liegen ungefähr in einer Ebene, wenn sich die beiden Arme entlang des Stützdorns erstrecken.

## Beschreibung

Die Erfindung betrifft einen Rohrabschneider mit einem Paar drehbar gelagerten Stützrollen gemäß dem Oberbegriff des Patentanspruches 1.

Ein Rohrabschneider, auch Rohrschneider oder Rollenschneider genannt, ist ein Handwerkzeug zum Trennen von Metallrohren, das zum Beispiel bei Wasser- und Heizungsinstallationen verwendet wird. Es besteht aus einem das Rohr umgreifenden Träger, an dem ein Paar Stützrollen und ein diesen gegenüberliegendes Schneidrad gelagert sind, wobei der Abstand zwischen den Stützrollen und dem Schneidrad mittels einer Gewindespindel einstellbar ist.

Um ein Rohr zu trennen, wird es in das geöffnete Werkzeug eingelegt, und das Schneidrad wird gegen das Rohr gepresst. Dreht man jetzt den Rohrabschneider radial um das Rohr, entsteht eine Kerbe, die tiefer wird, wenn man den Vorgang wiederholt, nachdem man das Schneidrad nachgestellt, bis das Rohr abgetrennt ist.

Will man ein dünneres Rohr schneiden, kann man zur Stabilisierung einen passenden Dorn hinein stecken, wobei auch eine Abquetschwirkung zwischen Dorn und Schneidrad entsteht.

Die US 2 821 781 A offenbart einen Rohrabschneider mit einem an einem Arm angeordneten Schneidrad und einem zur Schneidabstützung auf Höhe des Schneidrades im Rohr angeordneten drehbaren Dorn. Das Schneidrad und der Dorn sitzen an den Enden der beiden Schenkel eines U-förmigen Metallbügels, die mittels einer Spannhülse zusammengepresst werden können. Je länger das abzuschneidende Rohrstück ist, desto weiter muss die Spannhülse von Schneidrad und Dorn entfernt sein, und dementsprechend werden die Schenkel beim Spannen der Spannhülse stark belastet und müssen sehr stabil ausgebildet sein, damit sie sich nicht biegen oder brechen.

Die DE 20 2007 004 482 U1 offenbart einen zur Schneidabstützung in ein Rohr einführbaren zylindrischen Abstützkörper.

Der Erfindung liegt die Aufgabe zu Grunde, einen Rohrabschneider von dem zu Beginn genannten allgemein verwendeten Typ, d. h. mit einem Paar drehbar gelagerten Stützrollen, dahingehend weiterzuentwickeln, dass er besonders einfach und für das abzuschneidende Rohr schonend handhabbar ist und dass man mit ihm sowohl sehr kurze Rohrstücke als auch längere Rohrstücke leicht und präzise abschneiden kann.

Diese Aufgabe wird durch den in Patentanspruch 1 angegebenen Rohrabschneider gelöst.

Vorteilhafte Weiterbildungen der Erfindung sind in den abhängigen Patentansprüchen angegeben.

Bei dem erfindungsgemäßen Rohrabschneider muss das Rohr nicht irgendwie eingespannt werden, wodurch es verformt oder zerkratzt werden könnte, und auch nicht der Rohrabschneider, sondern der Rohrabschneider ist freihändig bedienbar, wobei eine Hand den Rohrabschneider hält und die andere das abzuschneidende Rohr hält und dreht.

Wegen des integrierten Stützdorns muss man bei der Arbeit nicht erst nach einem passenden Stützdorn suchen, und außerdem bilden der Stützdorn und sein Kopf eine fest mit dem übrigen Rohrabschneider verbundene Führung für das Rohr, die es erlaubt, auch sehr kurze Rohrstücke abschneiden oder ein Rohr um ein sehr kleines Stück zu kürzen, was mit bekannten Rohrabschneidern nicht möglich ist, ohne das Rohr zu verformen oder auf andere Weise zu beschädigen.

In einer bevorzugten Ausführungsform besitzt der Rohrabschneider einen integrierten Spannbügel zum Zusammenpressen der Enden der zwei Arme.

In einer weiteren bevorzugten Ausführungsform besitzt der Rohrabschneider einen Satz von auswechselbaren Köpfen mit unterschiedlichen Durchmessern entsprechend unterschiedlichen Norm-Rohrdurchmessern, so dass man mit nur einem Rohrabschneider Standardrohre mit unterschiedlichen Durchmessern bearbeiten kann.

In noch einer bevorzugten Ausführungsform besitzt der oder jeder Kopf einen zylindrischen Abschnitt, in dem eine ringsum verlaufende Rille oder Stufe ausgebildet ist, in die das Material des abzuschneidenden Rohres beim Schneiden gedrückt wird. Dies erleichtert das Abschneiden und erzeugt einen nach innen gerichteten Grat am Rohr, der es erleichtert, das so abgeschnittene Rohrstück in ein anderes, dazu passendes Rohr zu stecken.

Vorzugsweise ist der oder jeder Kopf an seinem vom Stützdorn abgewandten Ende im Durchmesser verjüngt und insbesondere gerundet oder konisch, um ein abzuschneidendes Rohr leicht darauf aufschieben zu können. Demselben Zweck dient es, wenn mindestens einer der zwei langgestreckten Arme und insbesondere beide Arme schwenkbar an dem vom Kopf abgewandten Ende des Stützdorns gelagert sind.

Ein auf den Stützdorn passender Stellring erleichtert es, ein Rohr oder viele Rohre nacheinander auf eine gewünschte Länge zu schneiden.

Die Hauptteile des Rohrabschneiders, nämlich der Stützdorn, die zwei Arme und ggf. der Spannbügel können aus einem leicht formbaren Material wie z. B. Aluminium oder Hartkunststoff bestehen, und nur der Kopf, die Stützrollen, das Schneidrad und Montageteile wie z. B. Schrauben müssen aus widerstandsfähigeren Materialien wie z. B. Stahl oder rostfreiem Stahl bestehen.

Der erfindungsgemäße Rohrabschneider eignet sich besonders zum Abschneiden von dünneren Rohren mit Wandstärken von weniger als einem Millimeter.

Es folgt eine Beschreibung von Ausführungsbeispielen anhand der Zeichnungen. Darin zeigen:
- Fig. 1: einen Rohrabschneider mit Stützdorn und C-förmigem Spannbügel;
- Fig. 2: einen Rohrabschneider mit Stützdorn und ringförmig geschlossenem Spannbügel;
- Fig. 3: Einzelteile eines Rohrabschneiders in einem dritten Ausführungsbeispiel;
- Fig. 4: ein viertes Ausführungsbeispiel für einen Rohrabschneider;
- Fig. 5: ein fünftes Ausführungsbeispiel für einen Rohrabschneider;

- Fig. 6: ein sechstes Ausführungsbeispiel für einen Rohrabschneider, und
- Fig. 7: eine Abänderung des Spannbügels der Fig. 2.

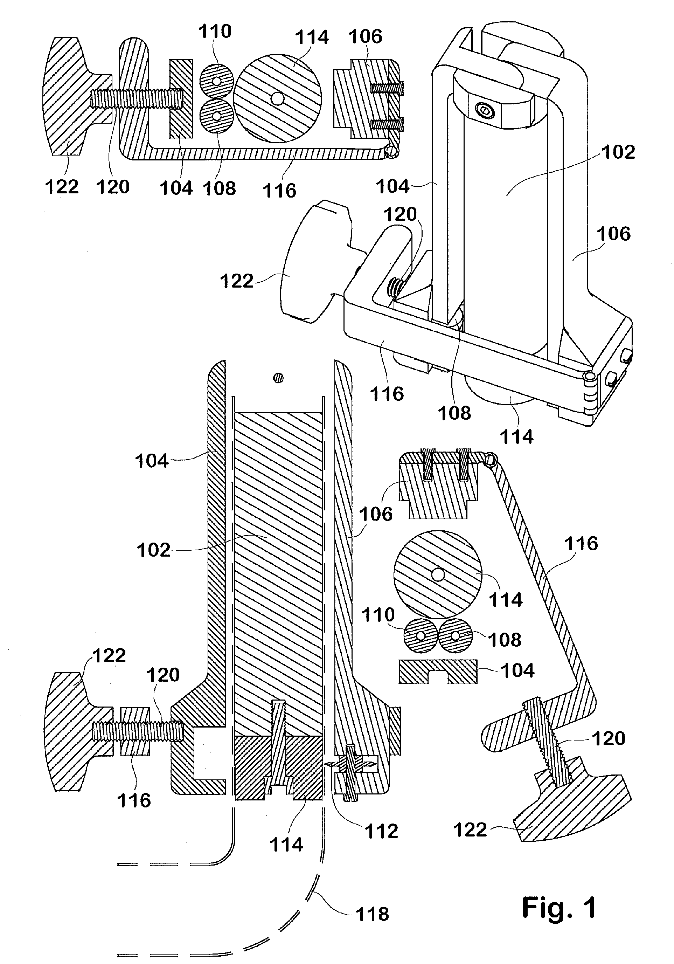

Fig. 1 zeigt ein erstes Ausführungsbeispiel für einen Rohrabschneider, und zwar rechts oben perspektivisch, links unten in einem Längsschnitt ohne die Stützrollen sowie links oben und rechts unten in distalen Querschnitten im Bereich des Spannbügels, wenn dieser geschlossen bzw. geöffnet ist.

Der in Fig. 1 gezeigte Rohrabschneider enthält einen langgestreckten zylindrischen Stützdorn 102. An einem ersten, proximalen Ende des Stützdorns 102 sind zwei langgestreckte Arme schwenkbar gelagert, nämlich ein Stützrollen-Arm 104 und ein Schneidrad-Arm 106. Die Arme 104, 106 sind jeweils ungefähr so lang wie der Stützdorn 102 und sind derart am Stützdorn 102 gelagert, dass sie in die in Fig. 1 gezeigte Stellung schwenkbar sind, in der sie sich auf einander entgegengesetzten Seiten des Stützdorns 102 jeweils von dem proximalen Ende in Richtung auf ein zweites, distales Ende des Stützdorns 102 erstrecken.

An einem distalen Ende des Stützrollen-Arms 104 sind zwei Stützrollen 108, 110 drehbar gelagert, und an einem distalen Ende des Schneidrad-Arms 106 ist ein Schneidrad 112 drehbar gelagert.

Das distale Ende des Stützdorns 102 setzt sich in einen zylindrischen Kopf 114 fort, der mindestens denselben Durchmesser wie der Stützdorn 102 hat. Der Kopf 114 besteht aus einem möglichst widerstandsfähigen Material wie z. B. Edelstahl, während der Stützdorn 102 und einige andere Teile des Rohrabschneiders auch aus leichteren Materialien wie z. B. Aluminium oder Hartkunststoff bestehen können.

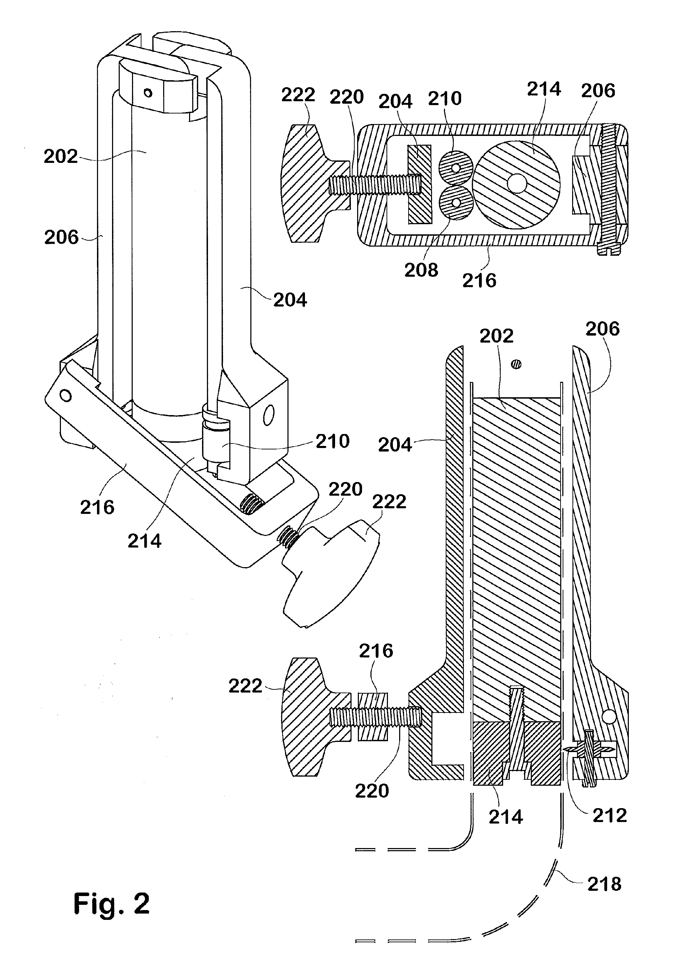

Der Kopf 114 ist in den Ausführungsbeispielen von Figuren 1 und 2 als fest mit dem Stützdorn 102 verschraubt dargestellt, doch sollte er axial am Stützdorn 102 drehbar sein, z. B. durch ein geeignetes Spiel in seiner Verschraubung oder mittels Kugel- oder Wälzlagern. In diesem Fall sollte der Kopf 114 mindestens einen geringfügig größeren Durchmesser als der Stützdorn 102 haben.

Die Stützrollen 108, 110, das Schneidrad 112 und der Kopf 114 haben im Wesentlichen parallele Achsen bzw. Drehachsen und liegen ungefähr in einer Ebene, wenn die beiden Arme 104, 106 in der gezeigten Position sind, in der sie sich entlang des Stützdorns 102 erstrecken.

Am Ende des Schneidrad-Arms 106 ist ein C-förmiger Spannbügel 116 schwenkbar angebracht. Der Spannbügel 116 kann zur Seite geschwenkt werden, wie in Fig. 1 rechts unten gezeigt. Bei so geöffnetem Spannbügel 116 können der Stützrollen-Arm 104 und der Schneidrad-Arm 106 etwas vom Stützdorn 102 weg geschwenkt werden, und ein zu abzuschneidendes Rohr 118 mit einem Innendurchmesser, der dem Außendurchmesser des Kopfes 114 entspricht oder auch einige Millimeter größer sein kann, kann dann über den Stützdorn 102 geschoben werden, wie in Fig. 1 links unten gestrichelt eingezeichnet.

Nach dem Schließen des Spannbügels 116 wird eine Gewindespindel 120 am Spannbügel 116 mittels eines Knaufs 122 gedreht, wodurch die distalen Enden des Stützrollen-Arms 104 und des Schneidrad-Arms 106 vom Spannbügel 116 zusammengepresst werden, so dass das Rohr 118 zwischen den Stützrollen 108, 110 und dem Schneidrad 112 eingeklemmt wird.

Wird das Rohr 118 dann um den Stützdorn 102 gedreht, was wegen des drehbar gelagerten Kopfes 114 am Stützdorn 108 normalerweise von Hand möglich ist, schneidet das Schneidrad 112 eine Kerbe in das Rohr 118, die immer tiefer wird, wenn die Gewindespindel 120 zwischendurch nachgestellt wird, bis das Rohr 118 abgeschnitten ist. Zum Entnehmen des abgeschnittenen Rohrstücks aus dem Rohrschneider wird die Gewindespindel 120 gelöst und ggf. der Spannbügel 116 weg geschwenkt.

Fig. 2 zeigt ein zweites Ausführungsbeispiel für einen Rohrabschneider, und zwar links oben perspektivisch, rechts unten in einem Längsschnitt ohne die Stützrollen sowie rechts oben in einem distalen Querschnitt im Bereich des Spannbügels.

Dieses Ausführungsbeispiel unterscheidet sich von dem in Fig. 1 gezeigten Rohrabschneider im Wesentlichen nur darin, dass statt eines C-förmigen Spannbügels 116 ein ringförmig geschlossener Spannbügel 216 vorgesehen ist, der nicht zur Seite, sondern in distaler Richtung vom Stützdorn 202 weg geschwenkt werden kann. Alle übrigen Teile sind jenen des Rohrabschneiders von Fig. 1 gleich oder ähnlich und sind jeweils mit um 100 erhöhten Bezugszeichen bezeichnet.

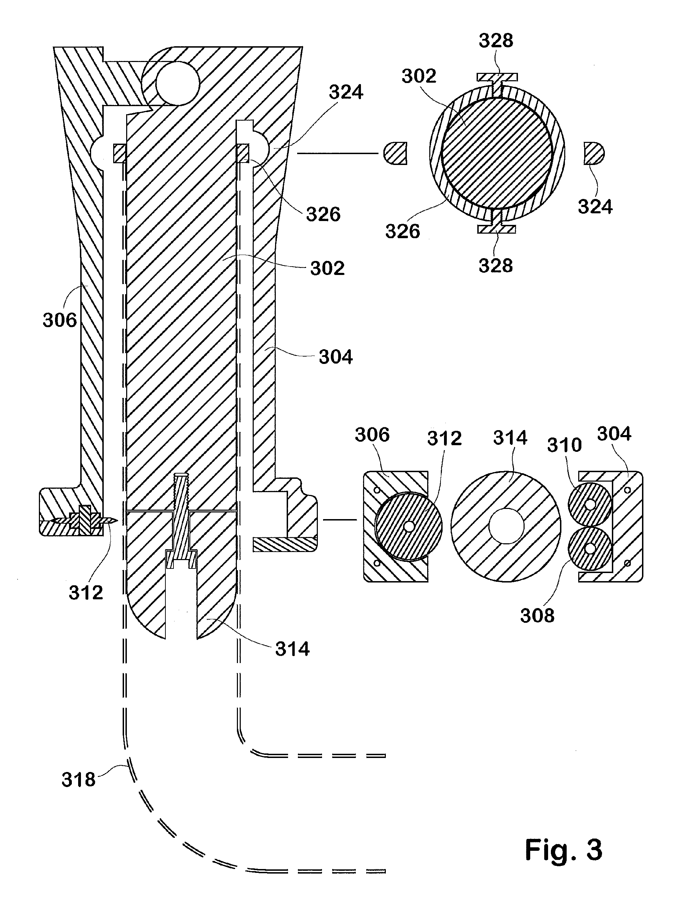

Fig. 3 zeigt ein drittes Ausführungsbeispiel für einen Rohrabschneider, und zwar links in einem Längsschnitt ohne die Stützrollen, rechts oben in einem proximalen Querschnitt im Bereich eines verstellbaren Rohranschlags und rechts unten in einem distalen Querschnitt durch Stützrollen und Schneidrad.

Der in Fig. 3 gezeigte Rohrabschneider enthält einen langgestreckten zylindrischen Stützdorn 302. Mit einem ersten, proximalen Ende des Stützdorns 302 ist ein Stützrollen-Arm 304 einstückig verbunden, der sich parallel zum Stützdorn 302 in Richtung auf ein zweites, distales Ende des Stützdorns 302 erstreckt. Am distalen Ende des Stützrollen-Arms 304 sind zwei Stützrollen 308, 310 drehbar gelagert.

Am proximalen Ende des Stützdorns 302 ist ein Schneidrad-Arm 306 schwenkbar gelagert, so dass er aus der in Fig. 3 gezeigten Stellung, in der er parallel zum Stützdorn 302 und zum Schneidrad-Arm 306 verläuft, verschwenkbar ist, so dass ein am distalen Ende des Schneidrad-Arms 306 drehbar gelagertes Schneidrad 312 vom Stützdorn 302 weg bewegt wird, um ein abzuschneidendes Rohr 318 über den Stützdorn 302 schieben zu können.

Der einstückig mit dem Stützdorn 302 verbundene Stützrollen-Arm 304 besitzt eine proximale Einschnürung 324, die ihm auch ohne Drehgelenk eine gewisse Nachgiebigkeit verleiht, um das Rohr 318 über den Stützdorn 302 schieben zu können.

Das distale Ende des Stützdorns 302 setzt sich in einen Kopf 314 aus Edelstahl fort, der nahe am Stützdorn 302 und auf Höhe des Schneidrades 312 zylindrisch ist, mit einem geringfügig größeren Durchmesser als der Stützdorn 302, und sich dann im Querschnitt verjüngt. In diesem Beispiel ist die Spitze des Kopfes 314 halbkugelförmig, doch kann sie auch irgendeine andere Form haben, z. B. konisch, welche es erleichtert, das Rohr 318 auf den Stützdorn 302 zu stecken. Der Kopf 314 ist axial drehbar am Stützdorn 302 gelagert.

Die Stützrollen 308, 310, das Schneidrad 312 und der Kopf 314 haben im Wesentlichen parallele Drehachsen und liegen ungefähr in einer Ebene, wenn der Schneidrad-Arm 306 mit seinem Schneidrad 312 am Stützdorn 302 anliegt, wie in Fig. 3 gezeigt.

Das proximale Ende des Stützdorns 302 ist von einem Stellring 326 umgeben, der entlang des Stützdorns 302 verstellbar und mittels Rändelschrauben 328 in einer gewünschten Axialposition fixierbar ist, so dass man viele Rohre auf gleiche Länge schneiden kann, ohne jedes Mal neu Maß nehmen zu müssen.

In diesem und den nachfolgend beschriebenen Ausführungsbeispielen ist der Rohrabschneider ohne einen Spannbügel gezeigt. Auch in diesen Ausführungsbeispielen kann der Rohrabschneider einen Spannbügel 116 bzw. 216 wie in Figuren 1 und 2 oder eine andere Vorrichtung zum Zusammenpressen der Enden der zwei Arme aufweisen, oder es wird auf eine dedizierte Spannvorrichtung verzichtet, und die Arme werden z. B. einfach mit einer Rohrzange zusammengepresst.

Wie in den vorhergehenden und nachfolgenden Ausführungsbeispielen durchschneidet das Schneidrad 312 das Rohr 318, wenn das Rohr 318 um den Stützdorn 302 gedreht wird und die Enden der zwei Arme 304, 306 nach und nach weiter zusammengepresst werden.

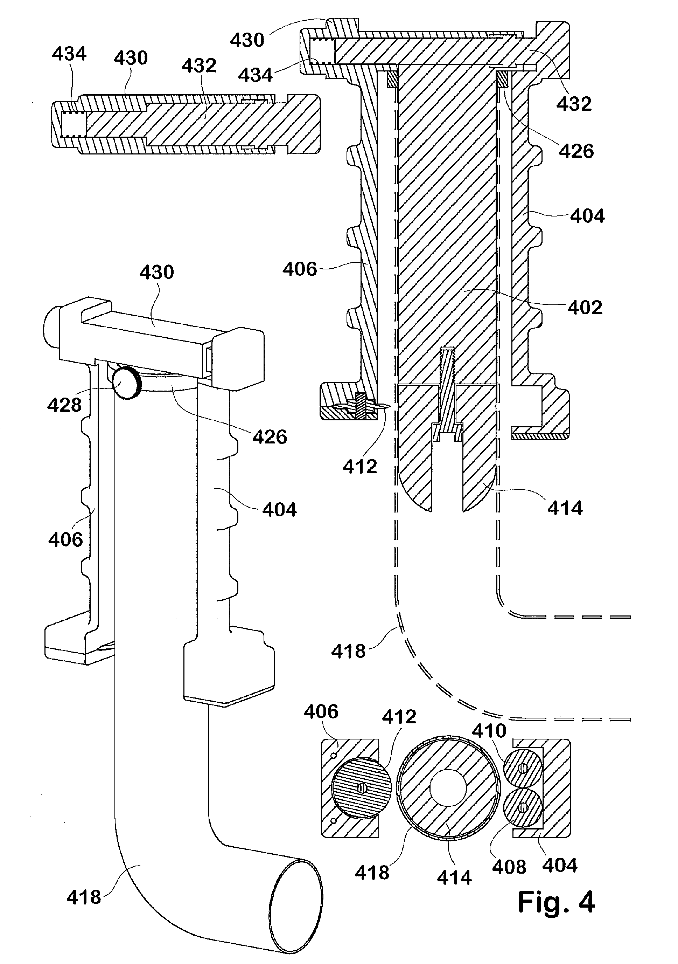

Fig. 4 zeigt ein viertes Ausführungsbeispiel für einen Rohrabschneider, und zwar links unten perspektivisch, rechts oben in einem Längsschnitt ohne die Stützrollen, links oben in einem proximalen Querschnitt durch eine Linearführung sowie rechts unten in einem distalen Querschnitt durch Stützrollen und Schneidrad.

Dieses Ausführungsbeispiel unterscheidet sich von dem in Fig. 3 gezeigten Rohrabschneider im Wesentlichen nur darin, dass der Schneidrad-Arm 406 nicht drehbar am Stützdorn 402 gelagert ist, sondern im Ganzen quer zur Achse des Stützdorns 402 linear verschiebbar ist.

Eine entsprechende Linearführung wird durch einen am proximalen Ende des Schneidrad-Arms 406 angeformten Schlitten 430 gebildet, der auf einer Schiene 432 gleiten kann, die am proximalen Ende des Stützrollen-Arms 404 angeformt ist und über die der Stützrollen-Arm 404 am Stützdorn 402 befestigt ist. Eine in der Schiene 432 angeordnete Schraubenfeder 434 drückt den Stützrollen-Arm 404 tendenziell vom Stützdorn 402 weg, um ein abzuschneidendes Rohr 418 leicht auf den Stützdorn 402 aufschieben zu können. Alle übrigen Teile sind jenen des Rohrabschneiders von Fig. 3 gleich oder ähnlich und sind jeweils mit um 100 erhöhten Bezugszeichen bezeichnet.

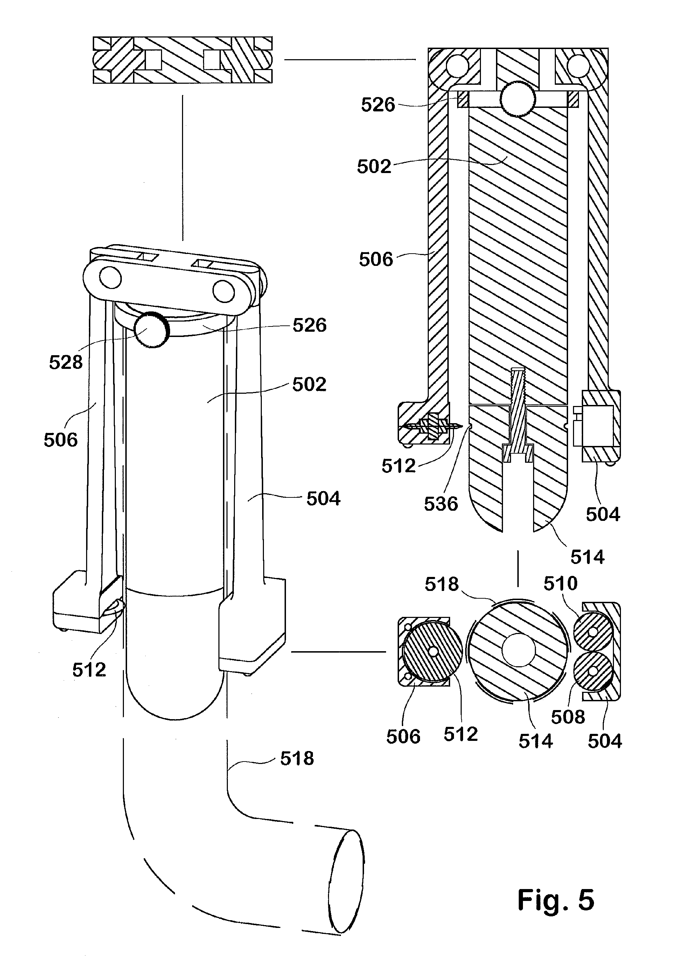

Fig. 5 zeigt ein fünftes Ausführungsbeispiel für einen Rohrabschneider, und zwar links unten perspektivisch, rechts oben in einem Längsschnitt ohne die Stützrollen, links oben in einem proximalen Querschnitt sowie rechts unten in einem distalen Querschnitt durch Stützrollen und Schneidrad.

Dieses Ausführungsbeispiel unterscheidet sich von dem in Fig. 3 gezeigten Rohrabschneider zum einen darin, dass der Stützrollen-Arm 504 und der Schneidrad-Arm 506 beide drehbar am Stützdorn 502 gelagert sind, ähnlich wie in den Ausführungsbeispielen von Figuren 1 und 2, und außerdem darin, dass im zylindrischen Teil des Kopfes 514 auf der Höhe des Schneidrades 512 eine ringsum verlaufende Rille 536 von einigen Zehntelmillimetern Tiefe ausgebildet ist.

Beim Schneiden wird Material des abzuschneidenden Rohres 518 in die Rille 536 gedrückt, was nicht nur das Abschneiden erleichtert, sondern auch den Rand des abgeschnittenen Rohres etwas nach innen eindrückt, was erwünscht sein kann, um ein so abgeschnittenes Rohrstück später leicht in ein anderes, dazu passendes Rohr stecken zu können, ohne es von Hand entgraten zu müssen. Dies gilt besonders für dünnere Rohre mit einer Wandstärke von etlichen Zehntelmillimetern, für welche die beschriebenen Rohrschneider besonders geeignet sind. Alle übrigen Teile sind jenen des Rohrabschneiders von Fig. 3 gleich oder ähnlich und sind jeweils mit um 200 erhöhten Bezugszeichen bezeichnet.

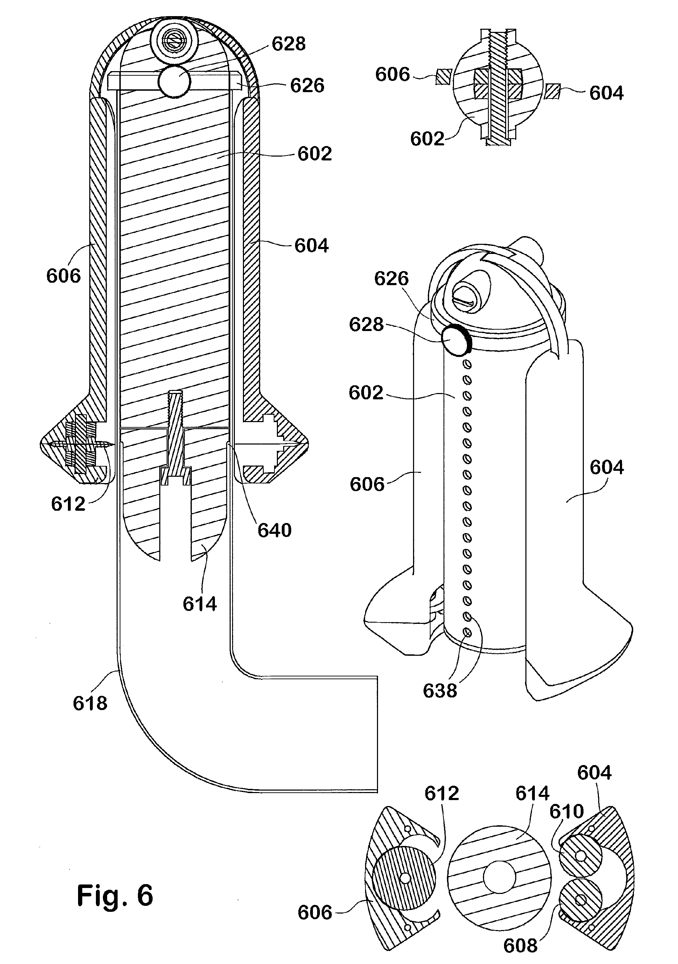

Fig. 6 zeigt ein sechstes Ausführungsbeispiel für einen Rohrabschneider, und zwar rechts in der Mitte perspektivisch, links in einem Längsschnitt ohne die Stützrollen, rechts oben in einem proximalen Querschnitt durch das Lager der Arme sowie rechts unten in einem distalen Querschnitt durch Stützrollen und Schneidrad.

Dieses Ausführungsbeispiel unterscheidet sich von dem in Fig. 5 gezeigten Rohrabschneider zum einen darin, dass der Stützrollen-Arm 604 und der Schneidrad-Arm 606 beide in einem einzigen Drehpunkt am Stützdorn 602 gelagert sind, und außerdem darin, dass der Stützdorn 602 entlang seiner Länge eine Reihe von Löchern 638 in gleichen Abständen aufweist, in welche die Rändelschrauben 628 des Stellrings 626 oder irgendein den ganzen Stützdorn durchdringender Fixierungsstift passen. Die dadurch vorgegebenen diskreten Positionen zum Befestigen des Stellrings 626 können am Stützdorn 602 beschriftet sein.

Das Ausführungsbeispiel von Fig. 6 unterscheidet sich von dem in Fig. 5 gezeigten Rohrabschneider außerdem darin, dass statt der Rille 536 eine Stufe 640 im zylindrischen Abschnitt des Kopfes 614 ausgebildet ist, an der sich der Durchmesser des Kopf 614 von einem Durchmesser, der geringfügig größer als der Durchmesser des Stützdorns 602 ist, auf einen mehrere Zehntelmillimeter kleineren Durchmesser vermindert. Die Stufe 640 hat dieselbe Wirkung wie die Rille 536, wenn das Schneidrad 612 das abzuschneidende Rohr 618 an der Stufe 640 quetscht. Alle übrigen Teile sind jenen des Rohrabschneiders von Fig. 5 funktionell gleich und sind jeweils mit um 100 erhöhten Bezugszeichen bezeichnet.

Die oben beschrieben Ausführungsbeispiele können auf verschiedene Arten miteinander kombiniert werden. So kann der Kopf 114 oder 214 in Figuren 1 und 2 durch einen gerundeten bzw. konischen Kopf 314, 414, 514 oder 614 wie in Figuren 3 bis 6 ersetzt werden.

Mit den beschriebenen Rohrabschneidern kann man sehr kurze Rohrstücke abschneiden, z. B. bei den genannten Abflussrohren bis zu 4,5 mm kurze Rohrstücke.

Jeder der oben beschriebenen Rohrabschneider ist jeweils nur für Rohre mit einem bestimmten Durchmesser oder wenig mehr geeignet. Doch sind viele Rohre hinsichtlich des Durchmessers genormt. So haben dünnwandige Abflussrohre überaus häufig entweder 30, 35 oder 40 mm Durchmesser, so dass für die meisten Arbeiten drei verschiedene Rohrabschneider genügen.

In einem weiteren Ausführungsbeispiel ist jedoch nur ein einziger Rohrabschneider vonnöten, um Rohre mit unterschiedlichen Durchmessern schneiden zu können. In diesem Ausführungsbeispiel gehört zu jedem Rohrabschneider nicht nur ein Kopf, sondern mehrere auswechselbare Köpfe mit unterschiedlichen Durchmessern, beispielsweise je ein Kopf für Rohre mit 30, 35 und 40 mm Durchmesser. Damit all diese Rohre leicht in den Rohrabschneider eingeführt werden können, sollten der Stützrollen-Arm und der Schneidrad-Arm beide schwenkbar am Stützdorn gelagert sein, so dass diese Variante am ehesten auf Basis der Ausführungsbeispiele von Figuren 1, 2, 5 und 6 zu realisieren ist, eventuell auch auf Basis des Ausführungsbeispiels von Fig. 4, wenn die Schiene 432, die den Stützrollen-Arm 404 trägt, quer zum Stützdorn 402 verstellbar ist.

Ist ein Satz von mehreren auswechselbaren Köpfen mit unterschiedlichen Durchmessern vorhanden, können die Achsen der Stützrollen, des Schneidrades und des Kopf nur für einen der Köpfe genau parallel sein, während für die anderen Köpfe ein Kompromiss eingegangen werden muss. Eine gewisse Schrägstellung des Schneidrades ist unproblematisch. Eine gewisse Schrägstellung der Stützrollen kann entweder hingenommen werden, oder man gestaltet die Stützrollen leicht ballig, so dass ein anzuschneidendes Rohr unabhängig von seinem Durchmesser immer genau gegenüber dem Schneidrad von den Stützrollen abgestützt wird.

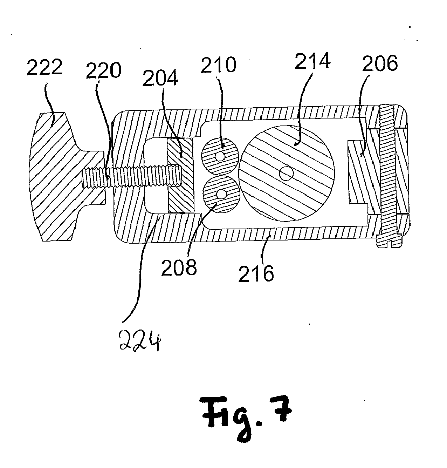

Die Fig. 7 zeigt eine Abänderung des U-förmigen Spannbügels 216 der Fig. 2, wobei diese Abänderung auf alle erfindungsgemäßen Ausführungsformen ohne weiteres übertragbar ist, die einen U-förmigen Spannbügel aufweisen. Der Spannbügel 216 der Fig. 7 weist einen Aussparung 224 auf, die eine Stützfunktion für den darin geführten Arm 204 hat. Die Aussparung 224 ist derart bemessen, dass der Arm 204 darin mit einem geringen Spiel im geschlossenen Zustand des Spannbügels 216 aufgenommen wird und somit mögliche Scherkräfte beim Scheiden eines Rohres durch diese Aussparung aufgenommen werden.

## Patentansprüche

1. Rohrabschneider mit einem Paar drehbar gelagerten Stützrollen (108, 110; 208, 210; 308, 310; 408, 410; 508, 510; 608, 610) und einem den Stützrollen gegenüberliegenden, drehbar gelagerten Schneidrad (112; 212; 312; 412; 512; 612) mit veränderlichem Abstand zu den Stützrollen, **dadurch gekennzeichnet, dass** der Rohrabschneider einen langgestreckten Stützdorn (102; 202; 302; 402; 502; 602) mit einem ersten Ende und einem zweiten Ende aufweist, wobei das zweite Ende des Stützdorns durch einen im Wesentlichen rotationssymmetrischen Kopf (114; 214; 314; 414; 514; 614) gebildet wird, der drehbar am Stützdorn gelagert ist, und dass an dem ersten Ende des Stützdorns zwei langgestreckte Arme (104, 106; 204, 206; 304, 306, 404, 406; 504, 506; 604, 606) angebracht sind, die ungefähr so lang wie der Stützdorn sind und die dafür eingerichtet sind, sich auf einander entgegengesetzten Seiten des Stützdorns jeweils von dem ersten Ende zu dem zweitem Ende des Stützdorns zu erstrecken, wobei am Ende eines der Arme (104; 204; 304; 404; 504; 604) die Stützrollen gelagert sind und am Ende des anderen Arms das Schneidrad gelagert ist, und wobei die Stützrollen, das Schneidrad und der Kopf im Wesentlichen parallele Achsen haben und ungefähr in einer Ebene liegen, wenn sich die beiden Arme entlang des Stützdorns erstrecken.

2. Rohrabschneider nach Anspruch 1, **dadurch gekennzeichnet, dass** am Ende eines der beiden Arme (104, 106; 204, 206; 304, 306, 404, 406; 504, 506; 604, 606) ein Spannbügel (116; 216) zum Zusammenpressen der Enden der zwei Arme angebracht ist, insbesondere ein vom Stützdorn (102; 202; 302; 402; 502; 602) weg schwenkbarer, entweder C-förmiger (116) oder ringförmig geschlossener (216) Spannbügel mit einer Gewindespindel (120; 220) zum Einstellen des Abstands zwischen den Stützrollen (108, 110; 208, 210; 308, 310; 408, 410; 508, 510; 608, 610) und dem Schneidrad (112; 212; 312; 412; 512; 612).

3. Rohrabschneider nach Anspruch 1 oder 2, **dadurch gekennzeichnet, dass** er einen Satz von auswechselbaren Köpfen (114; 214; 314; 414; 514; 614) mit unterschiedlichen Durchmessern entsprechend mehreren Norm-Rohrdurchmessern aufweist, wobei vorzugsweise die auswechselbaren Köpfen (114; 214; 314; 414; 514; 614) drehbar gelagert sind.

4. Rohrabschneider nach einem der vorhergehenden Ansprüche, **dadurch gekennzeichnet, dass** der Kopf (114; 214; 314; 414; 514; 614) einen zylindrischen Abschnitt aufweist, in dem eine ringsum verlaufende Rille (536) oder eine den Kopfdurchmesser verringernde Stufe (640) ausgebildet ist.

5. Rohrabschneider nach einem der vorhergehenden Ansprüche, **dadurch gekennzeichnet, dass** sich der Kopf oder die Köpfe (114; 214; 314; 414; 514; 614) an ihrem vom Stützdorn (102; 202; 302; 402; 502; 602) abgewandten Ende im Durchmesser verjüngen und insbesondere gerundet oder konisch sind.

6. Rohrabschneider nach einem der vorhergehenden Ansprüche, **dadurch gekennzeichnet, dass** mindestens einer der zwei langgestreckten Arme (104, 106; 204, 206; 304, 306, 404, 406; 504, 506; 604, 606) und insbesondere beide Arme schwenkbar an dem vom Kopf (114; 214; 314; 414; 514; 614) abgewandten Ende des Stützdorns (102; 202; 302; 402; 502; 602) gelagert sind.

7. Rohrabschneider nach einem der vorhergehenden Ansprüche, **dadurch gekennzeichnet, dass** er einen auf den Stützdorn (102; 202; 302; 402; 502; 602) passenden Stellring (326; 426; 536; 626) umfasst, der entlang des Stützdorns verstellbar und in einer gewünschten Axialposition fixierbar ist.

8. Rohrabschneider nach einem der vorhergehenden Ansprüche, **dadurch gekennzeichnet, dass** der Stützdorn (102; 202; 302; 402; 502; 602), die zwei Arme (104, 106; 204, 206; 304, 306, 404, 406; 504, 506; 604, 606) und ggf. der Spannbügel (116; 216) aus Aluminium oder Hartkunststoff bestehen und dass der Kopf (114; 214; 314; 414; 514; 614) aus einem widerstandsfähigeren Material besteht, insbesondere aus Stahl oder rostfreiem Stahl.
